# EUROPÄISCHE PATENTSCHRIFT

(11) **EP 4 469 760 B1**
(45) Veröffentlichungstag und Bekanntmachung des Hinweises auf die Patenterteilung: **22.04.2026**
(21) Anmeldenummer: 23702107.6
(22) Anmeldetag: 25.01.2023
(51) Int. Cl.: G01G 17/04, B65B 3/00, B65B 57/00

(54) **FIXIERVORRICHTUNG FÜR EINEN BEHÄLTER UND SYSTEM ZUM VERARBEITEN VON BEHÄLTERN**
FIXING DEVICE FOR A CONTAINER AND SYSTEM FOR PROCESSING CONTAINERS
DISPOSITIF DE FIXATION POUR UN RÉCIPIENT ET SYSTÈME DE TRAITEMENT DES RÉCIPIENTS

(30) Priorität: 28.01.2022 DE 102022102004
(43) Veröffentlichungstag der Anmeldung: 04.12.2024
(73) Patentinhaber: Bausch + Ströbel SE + Co. KG, 74532 Ilshofen (DE)
(72) Erfinder: BÖHMIKE, Andreas, 74532 Ilshofen (DE); HEIER, Steffen, 74532 Ilshofen (DE); KAISER, Klaus, 74532 Ilshofen (DE); SPIELER, Daniel, 74532 Ilshofen (DE); FÄRBER, Sebastian, 74532 Ilshofen (DE); WALLISCH, Manuel, 74532 Ilshofen (DE)
(74) Vertreter: DTS Patent- und Rechtsanwälte PartmbB
(86) Internationale Anmeldenummer: PCT/EP2023/051824
(87) Internationale Veröffentlichungsnummer: WO 2023/144217

(56) Entgegenhaltungen:
- EP-A2- 2 949 353
- DE-A1- 102018 213 800

## Beschreibung

Die vorliegende Erfindung betrifft eine Fixiervorrichtung zum vorübergehenden Fixieren eines insbesondere pharmazeutischen Behälters an einer Wiegevorrichtung eines Systems zum Verarbeiten von Behältern, insbesondere von pharmazeutischen Behältern.

Außerdem betrifft die vorliegende Erfindung ein System zum Verarbeiten von Behältern.

In einem derartigen System durchlaufen die Behälter, beispielsweise Spritzen, Karpulen, Ampullen und/oder Vials, typischerweise von einem Einlauf zu einem Auslauf verschiedenartige Verarbeitungsvorrichtungen, die auch als Verarbeitungsstationen bezeichnet werden können. Beispielsweise werden die über den Einlauf zugeführten Behälter zunächst gewogen, anschließend mit einem Produkt befüllt, erneut gewogen, verschlossen und über den Auslauf ausgekoppelt. Denkbar ist hierbei, dass die Verarbeitungsvorrichtungen räumlich und funktional zusammengefasst sind. Beispielsweise kommt nur eine Wiegevorrichtung zum Einsatz, an der die Behälter zunächst leer gewogen (Tarawiegung), befüllt und anschließend im befüllten Zustand gewogen werden (Bruttowiegung).

Bei den Behältern kann es sich insbesondere um pharmazeutische Behälter handeln, wie zum Beispiel Spritzen, Karpulen, Ampullen und/oder Vials. "Behälter" kann im vorliegenden Fall auch andersartige Packmittel umfassen, beispielsweise kosmetische Behälter. Das Produkt kann eine pharmazeutische Substanz sein.

Für den Transport der Behälter umfasst das System typischerweise eine Transportvorrichtung. Bei einer getakteten Transportvorrichtung werden die Behälter beispielsweise in einer Mehrzahl gruppenweise oder einzeln verarbeitet. Zu diesem Zweck sind die Behälter an einer Verarbeitungsvorrichtung vorübergehend abzustellen oder zu fixieren, vorzugsweise in definierter Position. Bei einer Wiegevorrichtung des Systems ist insbesondere sicherzustellen, dass die Behälter eine definierte Sollposition einnehmen und in dieser während des Wiegevorgangs vorzugsweise nicht bewegt werden. Im Hinblick auf eine mögliche Überlastung und/oder im Hinblick auf eine kurze Einschwingzeit der Wiegezelle ist es von Vorteil, wenn auf die Wiegezelle wirkende Kräfte beim Aufsetzen des Behälters auf die Fixiervorrichtung an der Wiegevorrichtung und beim Entnehmen des Behälters aus der Wiegevorrichtung möglichst geringgehalten werden können.

Bei standfesten Behältern, insbesondere Vials, kann sich dies aus diesem Grund einfach umsetzen lassen, weil die standfesten Behälter auf ein Aufstellelement an der Wiegezelle aufgestellt werden können. Eine Fixiervorrichtung kann in diesem Fall entfallen. Anders verhält es sich mit sogenannten nicht-standfesten Behältern, die aufgrund ihrer Geometrie nicht von selbst stehen und daher anderweitig fixiert werden müssen. Zu nicht-standfesten Behältern zählen beispielsweise Spritzen (einschließlich eines etwaigen Nadelschutzes), Karpulen, Ampullen oder andersartige Packmittel, die aufgrund ihrer Geometrie nicht eigenständig aufrecht stehen können.

In der EP 2 949 353 A2 wird ein Verfahren zur Behandlung oder Verarbeitung von Behältern offenbart, die zur Aufbewahrung von Substanzen für medizinische, pharmazeutische oder kosmetische Anwendungen dienen oder diese enthalten. Die Behälter werden mittels einer Fördereinrichtung zur Behandlung oder der Verarbeitung automatisiert an zumindest einer Prozessstation vorbeigeführt oder durchlaufen diese. Bei dem Verfahren werden eine Mehrzahl von Behältern von der Fördereinrichtung gefördert, während diese an einem Träger gemeinsam in einer regelmäßigen Anordnung gehalten werden. Die an dem Träger gehaltenen Behälter werden zur Behandlung oder Verarbeitung an oder in der jeweiligen Prozessstation in eine angehobene Position angehoben und nach der Behandlung oder Verarbeitung erneut abgesenkt, um an dem Träger in der regelmäßigen Anordnung gehalten zu werden.

Aufgabe der vorliegenden Erfindung ist es, eine Fixiervorrichtung für einen insbesondere pharmazeutischen Behälter zur Verwendung an einer Wiegevorrichtung eines Systems zum Verarbeiten von Behältern bereitzustellen, wobei mit der Fixiervorrichtung eine höhere Prozesssicherheit gewährleistet werden kann. Darüber hinaus ist es Aufgabe der vorliegenden Erfindung, ein System zum Verarbeiten von Behältern mit einer Wiegevorrichtung und einer Fixiervorrichtung bereitzustellen.

Diese Aufgabe wird durch eine erfindungsgemäße Fixiervorrichtung zum vorübergehenden Fixieren eines insbesondere pharmazeutischen Behälters an einer Wiegevorrichtung eines Systems zum Verarbeiten von Behältern gelöst, die Fixiervorrichtung umfassend eine Halteeinrichtung und eine Stützeinrichtung, wobei die Halteeinrichtung eine Behälteraufnahme, in die der Behälter einführbar und aus der der Behälter entnehmbar ist, mindestens ein Halteelement zum Halten des Behälters in der Behälteraufnahme und einen Auflagekörper umfasst, wobei die Stützeinrichtung einen Stützkörper und einen mit dem Stützkörper verbundenen Verbindungskörper zum Verbinden mit der Wiegevorrichtung umfasst, wobei die Halteeinrichtung über den Auflagekörper auf dem Stützkörper aufliegt, wobei der Auflagekörper relativ zum Stützkörper beweglich ausgestaltet ist abhängig von einer Kraft auf die Halteeinrichtung, insbesondere auf das mindestens eine Halteelement, beim Einführen des Behälters in die Behälteraufnahme und/oder beim Entnehmen des Behälters aus der Behälteraufnahme.

Bei der erfindungsgemäßen Fixiervorrichtung liegt die Halteeinrichtung auf der Stützeinrichtung auf, wobei der Auflagekörper auf dem Stützkörper aufliegt. Diese beiden Körper sind relativ zueinander beweglich. Wirkt auf die Halteeinrichtung eine Kraft, kann der Haltekörper relativ zum Stützkörper und damit die Halteeinrichtung relativ zur Stützeinrichtung bewegt werden. Durch diese Relativbewegung besteht zumindest in gewissem Umfang die Möglichkeit, die Halteeinrichtung hinsichtlich der einwirkenden Kraft von der Stützeinrichtung zu entkoppeln. Die auf die Stützeinrichtung wirkende Kraft, die auf die Wiegezelle der Wiegevorrichtung übertragen werden kann, ist dadurch gegenüber der auf die Halteeinrichtung wirkenden Kraft vorzugsweise verringert. Insbesondere kann die Fixiervorrichtung dementsprechend eine Kraftentkopplungseinrichtung umfassen oder ausbilden. Die auf die Halteeinrichtung wirkende Kraft beruht beispielsweise darauf, dass der Behälter beim Einsetzen mit dem mindestens einen Halteelement und/oder der Behälteraufnahme in Kontakt gelangt. Umgekehrt kann der Behälter beim Entnehmen aus der Behälteraufnahme beispielsweise mit dem Halteelement in Kontakt gelangen. Die Kraft auf die Halteeinrichtung kann dementsprechend beispielsweise in einer Einführrichtung des Behälters und/oder in einer Entnahmerichtung des Behälters wirken.

Durch die Verringerung der auf die Wiegezelle wirkenden Kraft lässt sich beispielsweise eine übermäßig hohe Belastung auf die Wiegezelle vermeiden, die möglicherweise zu einer Beschädigung führen könnte. Darüber hinaus wird das Einschwingverhalten der Wiegevorrichtung verbessert, weil die Einschwingzeit reduziert wird. Ein weiterer Vorteil der Erfindung kann insbesondere darin bestehen, das Risiko einer Beschädigung des Behälters beim Einführen in die Behälteraufnahme und/oder beim Entnehmen aus der Behälteraufnahme zu verringern, weil die Halteeinrichtung nicht-starr mit der Stützeinrichtung und damit der Wiegevorrichtung verbunden ist.

In die vorliegende Erfindung fließt die Überlegung mit ein, dass an der Wiegezelle der Wiegevorrichtung das Gewicht des Behälters bei einer Tarawiegung und bei einer Bruttowiegung zusammen mit dem Gewicht der Fixiervorrichtung bestimmt wird oder werden kann. Das Gewicht der Fixiervorrichtung kann als Offset des insgesamt mit der Wiegezelle bestimmten Gewichts abgezogen werden, um das Behältergewicht zu ermitteln. Dies ist gleichbedeutend damit, dass das Gewicht der Fixiervorrichtung gewissermaßen als "Nullpunkt" des bestimmten Gewichts der Wiegezelle angenommen wird.

Positions- und Orientierungsangaben wie beispielsweise "oben", "oberhalb", "unterhalb" oder dergleichen sind vorliegend auf einen bestimmungsgemäßen Gebrauch der Fixiervorrichtung bezogen. "Aufliegen" ist vorliegend insbesondere dahingehend zu verstehen, dass der Auflagekörper bezogen auf die Schwerkraftrichtung direkt oberhalb des Stützkörpers angeordnet ist und diesen kontaktiert.

Vorgesehen sein kann, dass die Halteeinrichtung genau eine Behälteraufnahme für nur einen Behälter aufweist.

Die erfindungsgemäße Fixiervorrichtung erweist sich insbesondere als vorteilhaft zum Wiegen von nicht-standfesten Behältern wie zum Beispiel Spritzen, Karpulen, Ampullen oder andersartigen Packmittel, die aufgrund ihrer Geometrie nicht eigenständig aufrecht stehen können.

Günstigerweise liegt die Halteeinrichtung allein über den Auflagekörper und den Stützkörper auf der Stützeinrichtung auf.

Bevorzugt ist vorgesehen, dass die Halteeinrichtung und die Stützeinrichtung, insbesondere der Auflagekörper und der Stützkörper, lose aneinander anliegen.

Die Halteeinrichtung und die Stützeinrichtung, insbesondere der Auflagekörper und der Stützkörper, sind bevorzugt frei von einer insbesondere festen mechanischen Verbindung miteinander.

Die Halteeinrichtung und die Stützeinrichtung, insbesondere der Auflagekörper und der Stützkörper, sind vorzugsweise frei von einem Gelenk mit beweglich miteinander verbundenen Gelenkgliedern. Insbesondere kann beispielsweise ein Drehgelenk und/oder ein Schubgelenk entfallen.

Bei einer bevorzugten Ausführungsform der Erfindung ist die Halteeinrichtung beispielsweise in Schwerkraftrichtung auf die Stützeinrichtung aufsetzbar und entgegen der Schwerkraftrichtung von der Stützeinrichtung anhebbar und dadurch von dieser lösbar.

Günstig ist es, wenn der Behälter in einer definierten Einführrichtung in die Behälteraufnahme einführbar ist und/oder in einer definierten Entnahmerichtung aus der Behälteraufnahme entnehmbar ist. Die Einführrichtung und die Entnahmerichtung sind vorzugsweise einander entgegengesetzt.

Bei einer bevorzugten Ausführungsform der Erfindung ist die Einführrichtung und/oder die Entnahmerichtung insbesondere in einer Horizontalebene angeordnet.

Die Fixiervorrichtung ist vorzugsweise so ausgebildet, dass die Einführrichtung und/oder die Entnahmerichtung quer und insbesondere senkrecht zu einer Erstreckungsrichtung des Behälters ausgerichtet ist. Behälter wie beispielsweise Spritzen, Karpulen oder Ampullen sind längserstreckt ausgestaltet und definieren eine Erstreckungsrichtung. Über das Einführen und/oder Entnehmen quer und insbesondere senkrecht zur Erstreckungsrichtung lässt sich zum Beispiel eine Hubbewegung bei der Übergabe und/oder der Entnahme vermeiden sowie etwaiger dabei entstehender Abrieb von Maschinenteilen.

Die Halteeinrichtung kann relativ zur Stützeinrichtung auf unterschiedliche Weisen beweglich sein.

Bei einer bevorzugten Ausführungsform ist die Halteeinrichtung relativ zur Stützeinrichtung verkippbar ausgestaltet beim Einsetzen des Behälters in die Behälteraufnahme und/oder beim Entnehmen aus der Behälteraufnahme. Hierbei können beispielsweise zwei Kipprichtungen vorgesehen sein, die einander entgegengesetzt sind. Beispielsweise verkippt die Halteeinrichtung relativ zur Stützeinrichtung nach hinten, bezogen auf die Einführrichtung, wenn der Behälter in die Behälteraufnahme eingesetzt wird. Beim Entnehmen des Behälters verkippt die Halteeinrichtung relativ zur Stützeinrichtung beispielsweise nach vorne, in der entgegengesetzten Richtung.

Die Kraft auf die Halteeinrichtung beim Einsetzen und/oder beim Entnehmen des Behälters führt insbesondere zu einem Kippmoment auf die Halteeinrichtung.

"Einsetzen" kann vorliegend auch als "Einführen" verstanden werden, und umgekehrt.

Vorgesehen sein kann, dass die Halteeinrichtung relativ zur Stützeinrichtung verschiebbar ausgestaltet ist. Beispielsweise kann eine Verschiebung in zwei einander entgegensetzte Richtungen abhängig von der Bewegungsrichtung des Behälters und der damit verbundenen Kraft auf die Halteeinrichtung erfolgen.

Von Vorteil ist es, wenn die Fixiervorrichtung oder das System zum Verarbeiten von Behältern ein ortsfestes Anschlagteil umfasst mit mindestens einem ersten Anschlagelement, wobei die Halteeinrichtung mindestens ein korrespondierendes zweites Anschlagelement umfasst zum Zusammenwirken mit dem mindestens einen ersten Anschlagelement, wobei über die Anschlagelemente ein Bewegungsumfang der Halteeinrichtung relativ zur Stützeinrichtung in zumindest einer Richtung begrenzt wird, vorzugsweise in zwei Richtungen. Über die Anschlagelemente kann die Bewegung der Halteeinrichtung relativ zur Stützeinrichtung innerhalb eines gewissen Bewegungsumfangs zugelassen werden, der Bewegungsumfang aber begrenzt werden, wenn die Anschlagelemente aneinander anschlagen. Dies ist vorzugsweise beim Einführen des Behälters und/oder beim Entnehmen des Behälters möglich, um den Bewegungsumfang in zwei Richtungen zu begrenzen. Begrenzt werden kann durch die Anschlagelemente vorzugsweise auch die auf die Stützeinrichtung wirkende und damit die auf die Wiegevorrichtung wirkende Kraft.

"Ortsfest" ist vorliegend insbesondere dahingehend aufzufassen, dass das Anschlagteil unbeweglich an dem erfindungsgemäßen System oder einer Komponente des Systems gehalten ist, beispielsweise an einem Gestell oder Unterbau. Vorzugsweise ist das Anschlagteil weder an der Stützeinrichtung noch an der Wiegevorrichtung gehalten.

Das Anschlagteil kann dementsprechend insbesondere gesondert von der Stützeinrichtung gefertigt oder gebildet sein.

Über die korrespondierenden Anschlagelemente wird vorzugsweise der Bewegungsumfang einer Kippbewegung der Halteeinrichtung relativ zur Stützeinrichtung in mindestens einer Kipprichtung begrenzt, vorzugsweise in zwei Kipprichtungen.

Vorgesehen sein kann, dass die Anschlagelemente auf einer der Behälteraufnahme abgewandten Seite der Halteeinrichtung angeordnet sind.

Als vorteilhaft kann es sich erweisen, wenn jeweils zwei im Abstand zueinander angeordnete Anschlagelemente des Anschlagteils und der Halteeinrichtung vorgesehen sind. Zum Beispiel sind die Anschlagelemente in einer Querrichtung quer und insbesondere senkrecht zur Einführrichtung des Behälters voneinander beabstandet.

Als Anschlagelemente sind beispielsweise ein zapfenförmiger Vorsprung und eine Eingriffsöffnung vorgesehen, in die der Vorsprung mit Spiel eingreift. Innerhalb des bestehenden Spiels kann die Halteeinrichtung relativ zum Anschlagteil bewegt werden. Am Rand der Eingriffsöffnung kann der Vorsprung anschlagen. Der Vorsprung ist zum Beispiel am Anschlagteil angeordnet, wobei die Halteeinrichtung die Eingriffsöffnung umfasst, oder umgekehrt. Die Eingriffsöffnung kann zum Beispiel eine Durchgangsöffnung insbesondere an der Halteeinrichtung sein.

Günstig ist es, wenn der Stützkörper und der Auflagekörper jeweilige Ausrichtelemente umfassen, die zur Definition einer Solllage des Auflagekörpers und des Stützkörpers zusammenwirken. Insbesondere ist vorgesehen, dass über die in bestimmungsgemäßer Weise relativ zueinander positionierten Ausrichtelemente die Solllage des Auflagekörpers am Stützkörper und damit eine Solllage der Halteeinrichtung an der Stützeinrichtung definiert werden. Es ist am Stützkörper und am Auflagekörper jeweils mindestens ein Ausrichtelement vorgesehen, wobei diese jeweils mehrere Ausrichtelemente umfassen können. Die jeweiligen Ausrichtelemente am Stützkörper und/oder am Auflagekörper können identisch oder funktionsgleich ausgestaltet sein.

Die Ausrichtelemente umfassen beispielsweise mindestens einen Vorsprung am Stützkörper in Richtung des Auflagekörpers und mindestens eine Aufnahme am Auflagekörper zur Aufnahme des Vorsprungs, oder umgekehrt. Als Vorsprung kann zum Beispiel eine Ausformung am Stützkörper oder am Auflagekörper angesehen werden. Bei einer bevorzugten Ausführungsform ist der mindestens eine Vorsprung zum Beispiel am Stützkörper angeordnet, und die mindestens eine Aufnahme am Auflagekörper.

Beim Verkippen der Halteeinrichtung relativ zur Stützeinrichtung, wie vorstehend bereits erwähnt, können die Ausrichtelemente beispielsweise aneinander gleiten.

Alternativ kann vorgesehen sein, dass die Ausrichtelemente zum Beispiel voneinander getrennt werden, beispielsweise durch Anheben der Halteeinrichtung, wenn die Halteeinrichtung relativ zur Stützeinrichtung verkippt.

Der Auflagekörper und der Stützkörper können vorzugsweise aus unterschiedlichen Materialien gefertigt sein. Beispielsweise ist der Stützkörper aus Metall gefertigt und der Auflagekörper aus einem Kunststoffmaterial gefertigt.

Der mindestens eine Vorsprung ist bei einer bevorzugten Ausführungsform der Erfindung im Querschnitt bogenförmig ausgestaltet. Hierbei kann der Vorsprung insbesondere zumindest abschnittsweise kreisbogenförmig oder sinusförmig ausgestaltet sein. "Bogenförmig" bezieht sich insbesondere auf die Kontur des Vorsprungs.

Die mindestens eine Aufnahme ist bei einer bevorzugten Ausführungsform der Erfindung im Querschnitt beispielsweise V-förmig (dreieckförmig), trapezförmig oder bogenförmig ausgestaltet.

Am Stützkörper und am Auflagekörper können, wie erwähnt, jeweils zwei Ausrichtelemente vorgesehen sein. Günstig kann es sein, wenn die Ausrichtelemente in einer Abstandsrichtung im Abstand zueinander angeordnet sind. Die Abstandsrichtung verläuft insbesondere längs einer Einführrichtung des Behälters in die Behälteraufnahme. In der Einführrichtung können dementsprechend am Stützkörper und am Auflagekörper jeweils zwei hintereinander angeordnete Ausrichtelemente angeordnet sein.

Ein jeweiliges Ausrichtelement am Stützkörper kann mit dem jeweiligen Ausrichtelement am Auflagekörper zusammenwirken.

Die Ausrichtelemente am Stützkörper und am Auflagekörper sind bei einer bevorzugten Ausführungsform der Erfindung zum Beispiel in einer Erstreckungsrichtung längserstreckt ausgestaltet und weisen dabei einen konstanten Querschnitt auf. Beispielsweise verläuft die Längserstreckung quer und insbesondere senkrecht zur vorstehend genannten Abstandsrichtung.

Der mindestens eine Vorsprung liegt in der Solllage des Auflagekörpers und des Stützkörpers vorzugsweise entlang zweier Auflagelinien an einem Rand der mindestens einen Aufnahme an.

Vorteilhaft kann es sein, wenn der Stützkörper oder der Auflagekörper längs der Abstandsrichtung wellenförmig ausgestaltet ist mit zwei quer und insbesondere senkrecht zur Abstandsrichtung verlaufenden Wellenbergen und einem dazwischen liegenden Wellental.

Vorteilhaft kann es sein, wenn der Auflagekörper oder der Stützkörper längs der Abstandsrichtung zwei im Abstand zueinander angeordnete und quer und insbesondere senkrecht zur Abstandsrichtung verlaufende Nuten aufweist, insbesondere mit V-förmigem, trapezförmigem oder bogenförmigem Querschnitt.

Eine bevorzugte Ausführungsform der Erfindung weist einen wellenförmig ausgestalteten Stützkörper und einen Auflagekörper mit den zwei im Abstand zueinander angeordneten Nuten auf.

Günstig ist es, wenn die Fixiervorrichtung zusammenwirkende Kopplungselemente umfasst, zwischen denen eine Kopplungskraft vorzugsweise zur Rückstellung der Halteeinrichtung relativ zur Stützeinrichtung bei einer Bewegung wirkt. Beispielsweise können die Kopplungselemente der Bewegung entgegenwirken, so dass die Bewegung der Halteeinrichtung relativ zur Stützeinrichtung erst einsetzt, wenn die Kraft auf die Halteeinrichtung einen vorgegebenen Schwellenwert übersteigt. Bei erfolgter Bewegung kann die Kraft zwischen den Kopplungselementen insbesondere eine Rückstellkraft sein, über die der Auflagekörper und der Stützkörper wieder in die Solllage überführt werden. Die Rückstellkraft kann zum Beispiel ergänzend zur Schwerkraft wirken.

Vorzugsweise umfassen die Halteeinrichtung und die Stützeinrichtung jeweils mehrere Kopplungselemente. Die Kopplungselemente sind beispielsweise voneinander beabstandet. Eine Gesamtkopplungskraft kann sich dadurch aus einer Summe von Kopplungskräften von jeweils zwei Kopplungselementen zusammensetzen. Über den Abstand der Kopplungselemente voneinander kann die Gesamtkopplungskraft über eine größere Fläche zwischen der Halteeinrichtung und der Stützeinrichtung wirken. Dies kann sich als vorteilhaft für eine zuverlässige Funktionsweise der Fixiervorrichtung erweisen.

Die Kopplungselemente koppeln vorzugsweise berührungslos miteinander.

Die Kopplungselemente sind beispielsweise als Magnetelemente ausgestaltet oder durch diese gebildet, entgegen deren Magnetkraft die Halteeinrichtung relativ zur Stützeinrichtung bewegbar ist und/oder von dieser entfernbar ist.

Insbesondere ist es von Vorteil, wenn die Kopplungselemente frei von bewegten Teilen sind oder keine bewegten Teile sind.

Beispielsweise kann die Halteeinrichtung entgegen der Kopplungskraft, insbesondere der Magnetkraft, von der Stützeinrichtung angehoben werden. Beim Absetzen der Halteeinrichtung auf die Stützeinrichtung kann die Kopplungskraft, insbesondere die Magnetkraft, zusätzlich zur Schwerkraft wirken.

Günstigerweise umfasst die Fixiervorrichtung am Auflagekörper und am Stützkörper mindestens jeweils ein Kopplungselement, wobei vorzugsweise jeweils eine Mehrzahl von Kopplungselementen am Auflagekörper und/oder am Stützkörper angeordnet ist.

Das jeweilige Kopplungselement ist beispielsweise in einer vorzugsweise verschlossenen Aufnahme am Auflagekörper oder am Stützkörper angeordnet. In der Aufnahme, beispielsweise einem Sackloch, ist das Kopplungselement bevorzugt unverlierbar gehalten.

Das mindestens eine Kopplungselement an der Halteeinrichtung und das mindestens eine Kopplungselement an der Stützeinrichtung sind in der Schwerkraftrichtung vorzugsweise direkt übereinander angeordnet, insbesondere bei Einnahme einer Solllage des Auflagekörpers relativ zum Stützkörper.

Als vorteilhaft kann es sich insbesondere erweisen, wenn an jeweils mindestens einem Ausrichtelement des Auflagekörpers und des Stützkörpers Kopplungselemente angeordnet sind. Dies gibt vorzugsweise die Möglichkeit, die Relativposition der Ausrichtelemente sicherzustellen und damit die Solllage des Auflagekörpers am Stützkörper zu definieren.

Die Halteeinrichtung und die Kopplungseinrichtung umfassen bevorzugt jeweils mindestens zwei Kopplungselemente, die quer und insbesondere senkrecht zu einer Einführrichtung des Behälters in die Behälteraufnahme voneinander beabstandet sind.

Günstig kann es sein, wenn die Fixiervorrichtung an der Halteeinrichtung oder an der Stützeinrichtung eine Aufnahme umfasst, in die die Stützeinrichtung oder die Halteeinrichtung eingreift, wobei der Auflagekörper und der Stützkörper in der Aufnahme angeordnet sind. Auf diese Weise können der Auflagekörper und der Stützkörper vor äußeren Einflüssen, beispielsweise Schmutzeintrag und/oder Kontamination, besser geschützt werden. Als vorteilhaft kann sich zum Beispiel die Anordnung der Aufnahme an der Halteeinrichtung erweisen, wobei der Stützkörper von unten in die Aufnahme eingreift.

Günstig ist es, wenn die Aufnahme eine Deckenwand umfasst oder ausbildet, die den Auflagekörper und den Stützkörper überdeckt, und/oder einen Rahmen, der den Auflagekörper und den Stützkörper entlang eines vorzugsweise gesamten Umfangs umgibt. Beispielsweise wird der Rahmen durch eine in der Umfangsrichtung geschlossen Seitenwand gebildet.

Von Vorteil kann es sein, wenn der Stützkörper oder der Auflagekörper mit Spiel in die Aufnahme eingreift. Über das Spiel wird eine Relativbewegung zumindest eines der Körper in der Aufnahme ermöglicht.

Das Spiel kann vorzugsweise in einer Einführrichtung des Behälters in die Behälteraufnahme größer sein als in einer Richtung quer und insbesondere senkrecht zur Einführrichtung. Auf diese Weise wird zum Beispiel eine Verschiebung oder Verkippung der Halteeinrichtung relativ zur Stützeinrichtung bei Einführung und/oder Entnehmen des Behälters ermöglicht. Der Bewegungsumfang in der Querrichtung wird demgegenüber begrenzt.

Günstig ist es, wenn der Stützkörper obenseitig am Verbindungskörper festgelegt ist.

Der Verbindungskörper umfasst vorzugsweise ein Verbindungselement für die lösbare Verbindung mittelbar oder unmittelbar mit der Wiegevorrichtung.

Der Verbindungskörper kann zum Beispiel abschnittsweise als Säulenelement ausgestaltet sein oder ein Säulenelement umfassen.

Eine bevorzugte Ausführungsform der Fixiervorrichtung weist eine pharmagerechte Ausgestaltung auf und kann insbesondere in einer optionalen Isolatorvorrichtung mit einer Atmosphäre für Dekontaminationszwecke eingesetzt werden (beispielsweise mittels H₂O₂).

Die Fixiervorrichtung ist zum Beispiel aus Edelstahl (zum Beispiel der Sorte 316L (AISI/SAE) und/oder Kunststoff gefertigt, insbesondere POM (Polyoxymethylen) oder PEEK (Polyetheretherketon).

Wie bereits erwähnt betrifft die vorliegende Erfindung auch ein System.

Ein erfindungsgemäßes, die eingangs genannte Aufgabe lösendes System zum Verarbeiten von Behältern umfasst eine Wiegevorrichtung, mindestens eine Fixiervorrichtung der vorstehend genannten Art, die mit der Wiegevorrichtung verbunden ist, und mindestens eine Transportvorrichtung, mit der mindestens ein Behälter der mindestens einen Fixiervorrichtung übergebbar und von dieser entnehmbar ist.

Die Übergabe mit der Transportvorrichtung erfolgt vorzugsweise in einer Einführrichtung in die Behälteraufnahme, die Entnahme in einer Entnahmerichtung, die der Einführrichtung entgegengesetzt ist.

Die Vorteile, die bereits im Zusammenhang mit der Erläuterung der erfindungsgemäßen Fixiervorrichtung erwähnt wurden, können bei dem erfindungsgemäßen System ebenfalls erzielt werden. Vorteilhafte Ausführungsformen des erfindungsgemäßen Systems ergeben sich durch vorteilhafte Ausführungsformen der erfindungsgemäßen Fixiervorrichtung. Diesbezüglich wird auf die voranstehenden Ausführungen verwiesen.

Vorgesehen sein kann, dass die Wiegevorrichtung des erfindungsgemäßen Systems eine Mehrzahl von Wiegezellen aufweist und eine Mehrzahl von Fixiervorrichtungen. Einer jeweiligen Wiegezelle kann zum Beispiel eine Fixiervorrichtung zugeordnet sein. Dies gibt zum Beispiel die Möglichkeit, eine Mehrzahl von Behältern gleichzeitig zu wiegen, wobei die Ergebnisse unabhängig voneinander ermittelt werden können.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Darstellung eines erfindungsgemäßen Systems zum Verarbeiten von insbesondere pharmazeutischen Behältern, umfassend eine Mehrzahl von erfindungsgemäßen Fixiervorrichtungen;
- Figur 2:: eine perspektivische Darstellung einer Fixiervorrichtung des Systems aus Figur 1, wobei ferner eine Transportvorrichtung mit einem Behälter, eine Wiegezelle einer Wiegevorrichtung und ein Anschlagteil dargestellt sind;
- Figur 3:: eine perspektivische Teildarstellung der erfindungsgemäßen Fixiervorrichtung mit daran gehaltenem Behälter in einer Explosionsansicht;
- Figur 4:: eine teilweise geschnittene Seitenansicht der erfindungsgemäßen Fixiervorrichtung und eine Transportvorrichtung, mit der ein Behälter an die Fixiervorrichtung übergeben werden soll;
- Figur 5:: eine Darstellung ähnlich Figur 4 in einer teilweise geschnittenen Teilansicht, wobei der Behälter Halteelemente der Fixiervorrichtung kontaktiert und deren Halteeinrichtung relativ zu deren Stützeinrichtung verkippt ist und eine Kippstellung einnimmt;
- Figur 6:: eine Darstellung ähnlich Figur 5, wobei der Behälter von der Fixiervorrichtung entnommen wird, wobei die Halteeinrichtung relativ zur Stützeinrichtung in einer andersartigen Kippstellung angeordnet ist;
- Figur 7:: eine vergrößerte Darstellung gemäß Detail A in Figur 2, wobei ein Behälter an der Fixiervorrichtung gehalten ist; und
- Figur 8:: eine perspektivische Darstellung der Fixiervorrichtung ähnlich Figur 7 unter Ausblendung des Behälters, eines Anschlagteils und eines Abdeckelementes der Fixiervorrichtung.

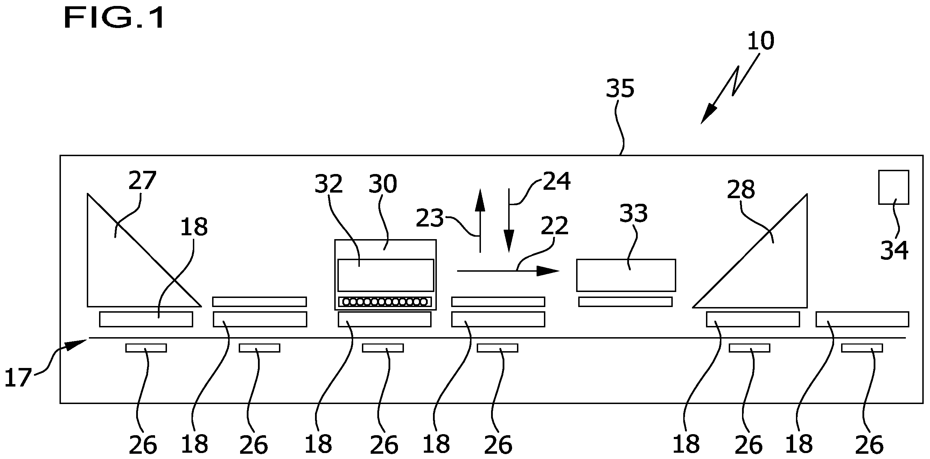

Figur 1 zeigt in schematischer Darstellung eine insgesamt mit dem Bezugszeichen 10 belegte vorteilhafte Ausführungsform eines erfindungsgemäßen Systems zum Verarbeiten von Behältern 12. Bei diesen handelt es sich vorliegend um pharmazeutische Behälter 12. Die Behälter 12 sind im vorliegenden Beispiel Spritzen 14, die einen Spritzenkörper 15 und einen Nadelschutz aufweisen. Die Spritzen 14 sind insbesondere nicht-standfeste Behälter 12, die von selbst nicht oder nur in seltenen Fällen auf einer vom Nadelschutz gebildeten Stirnseite stehen können.

Das System 10 dient dazu, die Behälter 12 in mehreren Stufen an Verarbeitungsvorrichtungen zu verarbeiten. Zum Transport der Behälter 12 umfasst das System 10 eine Transportanordnung 17 mit einer Mehrzahl von daran beweglich angeordneten Transportvorrichtungen 18.

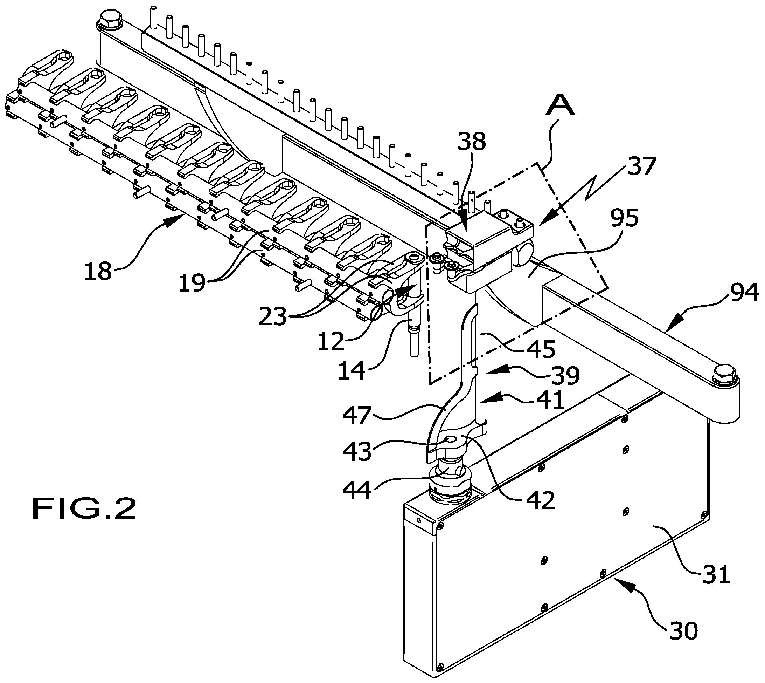

Die Transportvorrichtungen 18 (Figur 2) sind im vorliegenden Beispiel über sogenannte Rechen/Gegenrechen ausgestaltet. Das Grundprinzip des Transports von Behältern 12 mit Rechen/Gegenrechen ist am Beispiel von Vials in der DE 10 2018 213 800 A1 derselben Anmelderin beschrieben und wird aus diesein Grund vorliegend nicht weiter erläutert. Diese Funktionsweise der Transportvorrichtung 18 ist für die vorliegende Erfindung nicht wesentlich und einschränkend.

Zur Erläuterung wird unter Verweis insbesondere auf die Figuren 2 sowie 4 bis 6 lediglich vorgetragen, dass der Rechen und der Gegenrechen jeweils ein längserstrecktes Halteteil 19 und daran angeordnete Greifelemente 20 umfassen. Zwischen den Greifelementen 20 beider Halteteile 19 können die Behälter 12 gegriffen werden. Werden die Halteteile 19 in voneinander wegweisenden Richtungen bewegt, können die Behälter 12 freigegeben werden, damit sie in einer Behälteraufnahme der nachfolgend erläuterten Fixiervorrichtung verbleiben können. Durch Bewegung der Halteteile 19 relativ zueinander in der umgekehrten Richtung können die Behälter 12 wieder mit den Greifelementen 20 gegriffen werden.

Die Transportvorrichtungen 18 können längs einer Transportrichtung 22 und entgegensetzt dazu bewegt werden. Darüber hinaus können die Transportvorrichtungen 18 quer und insbesondere senkrecht zur Transportrichtung 22 in einer Vorschubrichtung und entgegengesetzt dazu bewegt werden. Die Vorschubrichtung ist im Folgenden in der Zeichnung als Einführrichtung 23 bezeichnet, die entgegengesetzte Richtung Entnahmerichtung 24. Die Bewegung der Transportvorrichtung 18 kann mit oder ohne Behälter 12 erfolgen.

Das Ergreifen und Freisetzen von Behältern 12 sowie die Bewegung längs der Transportrichtung 22 und der Richtungen 23, 24 ist im Einzelnen in der DE 10 2018 213 800 A1 beschrieben, auf die hiermit verwiesen wird.

Zum Bewegen der Transportvorrichtungen 18 umfasst die Transportanordnung 17 Antriebsvorrichtungen 26. Die Transportvorrichtungen 18 können unabhängig voneinander bewegt werden.

Das System 10 umfasst zum Einkoppeln der Behälter 12 an einem Einlauf ein Einkoppelelement 27. An einem Auslauf ist ein Auskoppelelement 28 vorgesehen.

Das System 10 umfasst eine Wiegevorrichtung 30. An der Wiegevorrichtung 30 kann das Gewicht eines jeden Behälters 12 bestimmt werden. Die Wiegevorrichtung 30 umfasst im vorliegenden Beispiel eine Mehrzahl von Wiegezellen 31. In der Zeichnung ist in Figur 2 aus Gründen der Übersichtlichkeit nur eine Wiegezelle 31 dargestellt. Insgesamt sind vorzugsweise so viele Wiegezellen 31 vorgesehen, wie die Transportvorrichtung 18 Stellen hat und Behälter 12 mitführen kann. Dies sind im vorliegenden Beispiel zwölf Stück.

Mit der Wiegevorrichtung 30 kann, über eine jeweilige Wiegezelle 31, das Taragewicht eines ungefüllten Behälters 12 und das Bruttogewicht eines befüllten Behälters 12 bestimmt werden.

Eine weitere Verarbeitungsvorrichtung ist ausgestaltet als Befüllvorrichtung 32 zum Befüllen der Behälter 12 mit einem Produkt, bei dem es sich vorliegend um eine pharmazeutische Substanz handelt. Die Befüllvorrichtung 32 ist vorliegend an der Wiegevorrichtung 30 angeordnet. Dadurch ergibt sich ein kompakter Aufbau des Systems 10. Die Bestimmung des Bruttogewichtes kann während des Befüllvorgangs oder nach dem Befüllvorgang erfolgen.

Der Wiegevorrichtung 30 und der Befüllvorrichtung 32 in der Transportrichtung 22 nachgelagert umfasst das System 10 eine als Schließvorrichtung 33 ausgestaltete weitere Verarbeitungsvorrichtung. Die befüllten Behälter 12 werden an der Schließvorrichtung 33 zum Beispiel mit Stopfen verschlossen.

Das System 10 umfasst eine Steuervorrichtung 34 zum Steuern und/oder Regeln des Betriebs. Es versteht sich, dass, soweit hier nicht erläutert, für bewegliche Komponenten des Systems 10 entsprechende Antriebe vorgesehen sein können.

Das System 10 umfasst ein Gestell 35 oder einen Unterbau. Optional kann eine das Gestell 35 überdeckende Isolatorvorrichtung zum Bereitstellen einer Atmosphäre für Dekontaminationszwecke vorgesehen sein, beispielsweise mittels H₂O₂.

Zum vorübergehenden Fixieren der Behälter 12 an der Wiegevorrichtung 30, insbesondere an einer jeweiligen Wiegezelle 31, umfasst das System 10 eine mit dem Bezugszeichen 37 belegte vorteilhafte Ausführungsform der erfindungsgemäßen Fixiervorrichtung. Figur 2 zeigt hierbei nur eine Fixiervorrichtung 37, die mit der Wiegezelle 31 verbunden ist. Es versteht sich, dass an den weiteren, nicht dargestellten Wiegezellen 31 ebenfalls eine Fixiervorrichtung 37 angeordnet ist (nicht gezeigt). Die Anzahl der Fixiervorrichtungen 37 entspricht der Anzahl der der Wiegezellen 31 und bevorzugt der Anzahl der Stellen der Transportvorrichtung 18. Die Fixiervorrichtungen 37 sind identisch ausgestaltet.

Die Wiegevorrichtung 30 kann insbesondere die Fixiervorrichtungen 37 umfassen.

Die Fixiervorrichtung 37 umfasst eine Halteeinrichtung 38 und eine Stützeinrichtung 39.

Die Stützeinrichtung 39 ist mit der Wiegezelle 31 verbunden. Denkbar ist insbesondere eine lösbare Verbindung.

Die Stützeinrichtung 39 umfasst einen Verbindungskörper 41. Der Verbindungskörper 41 weist ein Basiselement 42 auf. Am Basiselement 42 ist ein zum Beispiel zapfenförmiges Verbindungselement 43 angeordnet. Das Verbindungselement 43 greift in ein Aufnahmeelement 44 an der Wiegezelle 31 ein. Ein Verdrehsicherungsglied kann vorgesehen sein.

Der Verbindungskörper 41 umfasst ferner ein vom Basiselement 42 abstehendes Säulenelement 45. Das Säulenelement 45 ist in einer Höhenrichtung erstreckt, vorliegend längs der Schwerkraftrichtung 46. Ein Versteifungselement 47 versteift den Verbindungskörper 41 durch Angreifen am Basiselement 42 und am Säulenelement 45.

Die Stützeinrichtung 39 umfasst ferner obenseitig am Säulenelement 45 einen Stützkörper 49. Der Stützkörper 49 ist an einem Abschnitt 50 des Verbindungskörpers 41 festgelegt, im vorliegenden Beispiel durch Verschraubung. Der Abschnitt 50 ist plattenförmig ausgestaltet.

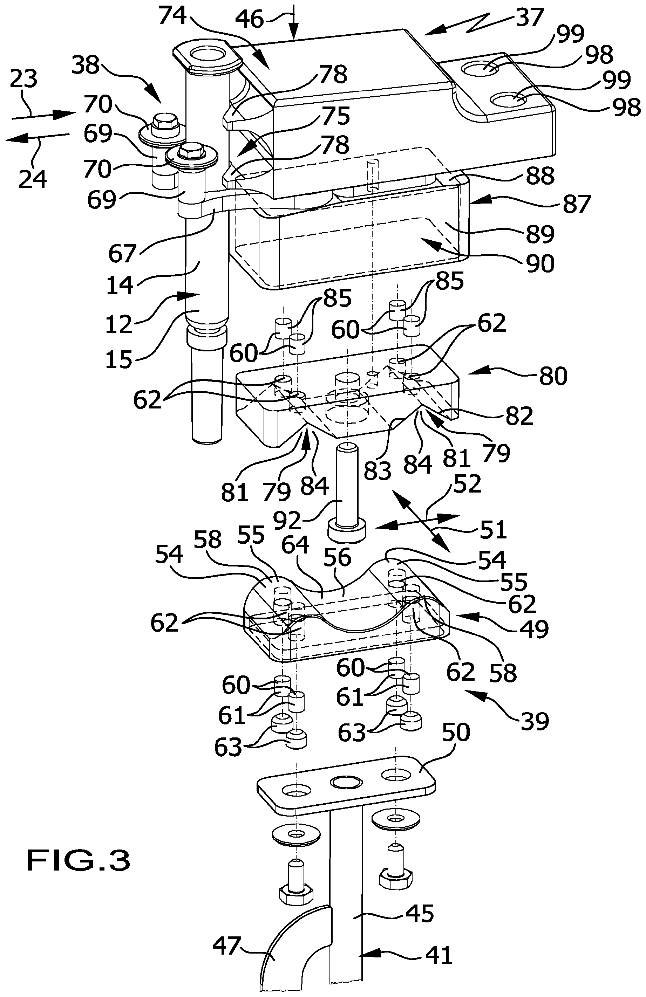

Der Stützkörper 49 ist in Draufsicht längs der Schwerkraftrichtung im Wesentlichen rechteckförmig ausgestaltet. Vorliegend weist der Stützkörper 49 eine Erstreckung längs der Einführrichtung 23 auf, die größer ist als quer und insbesondere senkrecht dazu, der Querrichtung 51. Figur 3 zeigt die Querrichtung 51, die quer und insbesondere senkrecht zu einer Abstandsrichtung 52 ausgerichtet ist. Die Abstandsrichtung 52 verläuft im bestimmungsgemäßen Gebrauch der Fixiervorrichtung 37 längs der Einführrichtung 23.

Es versteht sich, dass die Querrichtung 51 und die Abstandsrichtung 52 im Bezugssystem insbesondere der Fixiervorrichtung 37 definiert sind. Vorteilhaft ist es allerdings, wenn die Abstandsrichtung 52 längs der Einführrichtung 23 und der entgegengesetzten Entnahmerichtung 24 verläuft. Dies kann bei der Installation des Systems 10 sichergestellt werden.

Abweichend von dem vorstehend Gesagten könnte vorgesehen sein, dass die Erstreckung des Stützkörpers 49 längs der Abstandsrichtung 52 nicht größer ist als längs der Querrichtung 51.

Der Stützkörper 49 umfasst zwei in der Abstandsrichtung 52 voneinander beabstandete Vorsprünge 54. In einem Querschnitt bezogen auf die Querrichtung 51 sind die Vorsprünge 54 von ihrer Kontur bogenförmig gebildet. Im Bereich des Scheitels weisen die Vorsprünge 54 jeweils ungefähr eine Kreisbogenform auf. Der Querschnitt ist längs der Querrichtung 51 konstant.

Die Vorsprünge 54 sind längs der Querrichtung 51 längserstreckt ausgebildet (Figur 3). Die Vorsprünge 54 sind vorzugsweise identisch ausgestaltet.

Der Stützkörper 49 ist, längs der Abstandsrichtung 52 betrachtet, aufgrund der Gestalt der Vorsprünge 54 wellenförmig ausgestaltet mit in der Querrichtung 51 verlaufenden Wellenbergen 55 und einem dazwischenliegenden Wellental 56.

In der Einführrichtung 23 betrachtet existiert ein vorderer Vorsprung 54 und ein hinterer Vorsprung 54.

Die Vorsprünge 54 des Stützkörpers 49 bilden jeweils ein Ausrichtelement 58.

Die Stützeinrichtung 39 umfasst mindestens ein Magnetelement 60. Vorliegend sind mehrere Magnetelemente 60 vorgesehen, insbesondere vier Magnetelemente 60. Ein jeweiliges Magnetelement 60 bildet ein Kopplungselement 61.

Zur Aufnahme eines Magnetelementes 60 ist am Stützkörper 49 jeweils eine Aufnahme 62 gebildet. Die Aufnahme 62 ist als Sackloch ausgestaltet und von einer dem Abschnitt 50 zugewandten Seite des Stützkörpers 49 gebildet. Die Aufnahme 62 ist mittels eines Schließelementes 63 verschlossen.

Das Magnetelement 60 ist auf diese Weise innerhalb des Stützkörpers 49 angeordnet. Insbesondere ist eine obenseitige Oberfläche 64 des Stützkörpers 49 frei von Öffnungen.

Die Magnetelemente 60 sind jeweils an den Vorsprüngen 54 angeordnet. An einem jeweiligen Vorsprung 54 sind zwei Magnetelemente 60 angeordnet, die in der Querrichtung 51 voneinander beabstandet sind (Figur 3).

Die Halteeinrichtung 38 umfasst im vorliegenden Fall einen Grundkörper 66. Am Grundkörper 66 ist mindestens ein Halteelement 67 um eine Schwenkachse 68 schwenkbar gelagert. Vorliegend sind zwei Haltelemente 67 vorgesehen, die funktionsgleich ausgestaltet sind, weswegen im Wesentlichen auf ein Halteelement 67 eingegangen wird.

Das Halteelement 67 erstreckt sich ausgehend vom Grundkörper 66 in Richtung der Transportvorrichtung 18 und weist an einem freien Ende einen Haltevorsprung 69 auf. Am Haltevorsprung 69 ist ein Halteglied 70 angeordnet.

Mit dem Halteelement 67 ist ein Koppelelement 71 der Halteeinrichtung 38 schwenkfest gekoppelt. Die Koppelelemente 71 stehen miteinander über ein Vorspannelement 72 in Wirkverbindung. Das Vorspannelement 72 ist vorliegend ausgestaltet als Federelement, beispielsweise als Druckfeder.

Werden die Halteelemente 67 an den Haltegliedern 70 relativ zueinander gespreizt, erfolgt dies entgegen der Wirkung des Vorspannelementes 72. Umgekehrt können die Halteelemente 67 unter der Wirkung des Vorspannelementes 72 wieder so verschwenkt werden, dass die Halteglieder 70 einander angenähert werden.

Die Halteeinrichtung 38 umfasst ein Abdeckelement 74, das den Grundkörper 66, die Koppelelemente 71 und das Vorspannelement 72 überdeckt.

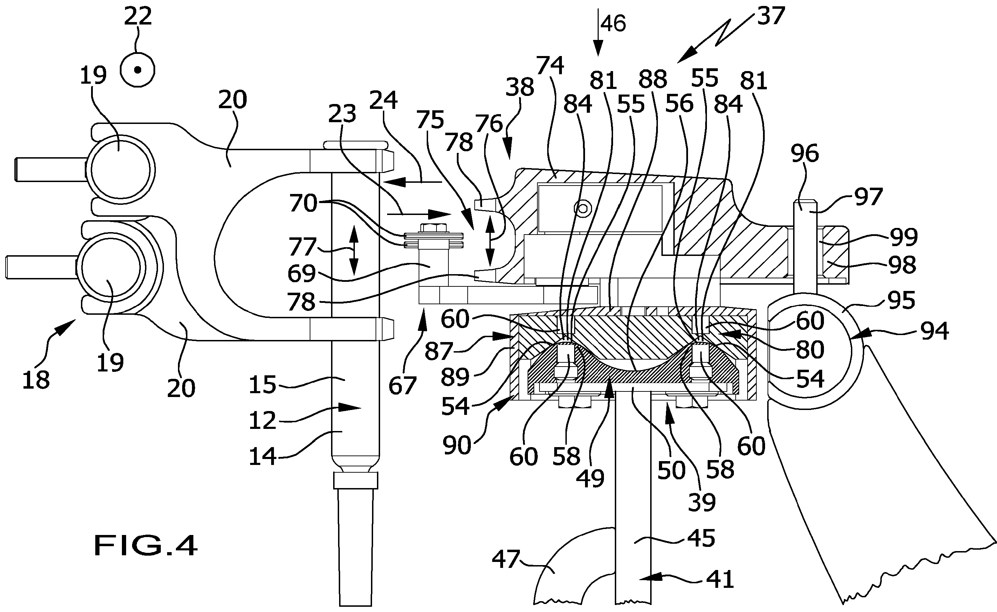

Die Halteeinrichtung 38 umfasst eine Behälteraufnahme 75 für den Behälter 12. Die Behälteraufnahme 75 ist der Transportvorrichtung 18 zugewandt an der Halteeinrichtung 38 angeordnet. Eine Aufnahmerichtung 76 (Figur 4) fluchtet mit einer Erstreckungsrichtung 77 des Behälters 12, wenn dieser in der Behälteraufnahme 75 angeordnet ist.

Die Einführrichtung 23 und/oder die Entnahmerichtung 24 liegt/liegen vorzugsweise in einer Ebene, senkrecht zu der die Aufnahmerichtung 76 ausgerichtet ist.

Die Behälteraufnahme 75 weist Anlageelemente 78 für den Behälter 12 auf, die vorzugsweise an das Abdeckelement 74 angeformt sind.

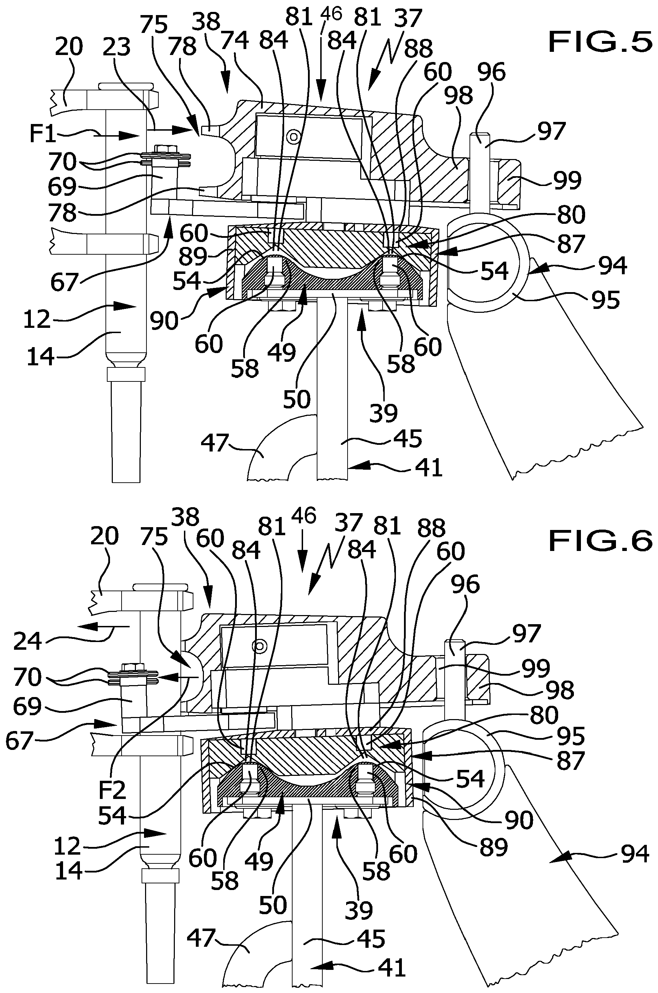

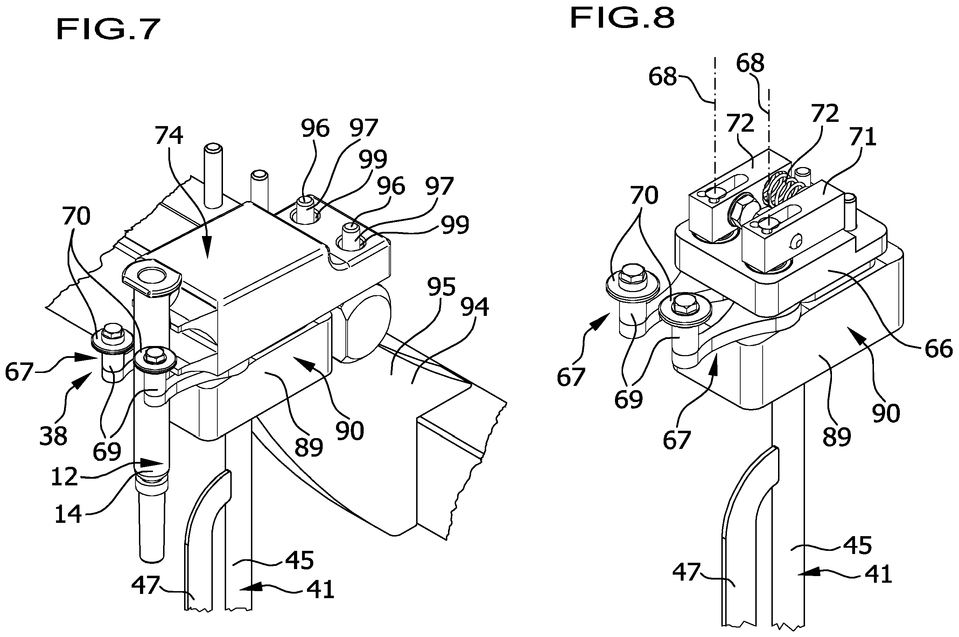

Zum Einführen in die Behälteraufnahme 75 wird der Behälter 12 mit der Transportvorrichtung 18 in der Einführrichtung 23 bewegt. Wenn der Behälter 12 die Halteglieder 70 kontaktiert, wirkt eine Kraft F1 auf die Halteeinrichtung 38. Die Kraft F1 ist in der Einführrichtung 23 ausgerichtet (Figur 5). Durch die Kraft F1 werden die Halteelemente 67 zueinander gespreizt, und der Behälter kann in die Behälteraufnahme 75 eingeführt werden. Er nimmt dann die in den Figuren 3 und 7 gezeigte Stellung ein.

Beim Entnehmen aus der Behälteraufnahme 75 wird der Behälter 12 in der Entnahmerichtung 24 bewegt. Dabei beaufschlagt der Behälter 12 die Halteeinrichtung 38 mit einer Kraft F2 (Figur 6). Die Kraft F2 wirkt in der Entnahmerichtung 24. Durch die Kraft F2 werden die Halteelemente 67 relativ zueinander gespreizt, und der Behälter 12 kann entnommen werden.

Die Halteeinrichtung 38 weist einen Auflagekörper 80 zum Zusammenwirken mit dem Stützkörper 49 auf.

Der Auflagekörper 80 ist in Draufsicht längs der Schwerkraftrichtung 46 im Wesentlichen rechteckförmig ausgestaltet. Hierbei ist die Erstreckung in der Abstandsrichtung 52 größer als in der Querrichtung 51. Wie beim Stützkörper 49 könnte dies jedoch auch anders sein.

In der Abstandsrichtung 52 ist der Auflagekörper 80 länger als der Stützkörper 49 und ragt beidseitig über diesen hinaus. In der Querrichtung 51 kann Entsprechendes vorgesehen sein.

Dem Stützkörper 49 zugewandt sind am Auflagekörper 80 vorliegend Aufnahmen 81 gebildet, wobei jeder Vorsprung 54 in eine der Aufnahmen 81 eingreifen kann, die ihm zugeordnet ist.

Die Aufnahmen 81 sind in der Abstandsrichtung 52 voneinander beanstandet und weisen dabei denselben Abstand voneinander auf wie die Vorsprünge 54. Vorzugsweise sind die Aufnahmen 81 identisch ausgebildet.

Im Querschnitt bezogen auf die Querrichtung 51 sind die Aufnahmen 81 im vorliegenden Beispiel V-förmig ausgestaltet. Ein jeweiliger Rand der Aufnahme 81 weist dabei zwei in einem Winkel aneinander angrenzende Randabschnitte 82, 83 auf. Der Winkel zwischen den Randabschnitten 82, 83 beträgt beispielsweise ungefähr 90° bis 120°, vorzugsweise ungefähr 100° bis 110°.

In der Querrichtung 51 ist der Querschnitt der Aufnahmen 81 konstant. Dementsprechend sind am Auflagekörper 80 in der Querrichtung 81 verlaufende, Aufnahmen 81 mit V-förmigem Querschnitt vorgesehen. Die Aufnahmen 81 sind als Nuten 79 gebildet.

Die Aufnahmen 81 bilden Ausrichtelemente 84 zum Zusammenwirken mit den Ausrichtelementen 58.

Am Auflagekörper 80 ist ebenfalls mindestens ein Magnetelement 60 angeordnet. Es sind mehrere Magnetelemente 60 vorgesehen, insbesondere vier Stück, entsprechend der Anzahl der Magnetelemente 60 am Stützkörper 49. Die Magnetelemente 60 des Auflagekörpers 80 bilden Kopplungselemente 85 zum Koppeln mit den Kopplungselementen 61.

Die Magnetelemente 60 sind in sacklochförmigen Aufnahmen 62 des Auflagekörpers 80 aufgenommen, die an der dem Stützkörper 49 abgewandten Seite des Auflagekörpers 80 gebildet sind. Insbesondere ist eine untenseitige Oberfläche des Auflagekörpers 80 frei von Öffnungen.

Die Magnetelemente 60 sind im Bereich der Aufnahmen 81 angeordnet. An jeder Aufnahme 81 sind zwei in der Querrichtung 51 voneinander beabstandete Magnetelemente 60 angeordnet.

Die Magnetelemente 60 des Stützkörpers 49 und des Auflagekörpers 80 liegen einander gegenüber, wenn diese eine Solllage relativ zueinander einnehmen (Figur 4). Insbesondere sind in diesem Fall die Magnetelemente 60 am Auflagekörper 80 in der Schwerkraftrichtung 46 oberhalb und insbesondere direkt oberhalb der Magnetelemente 60 am Stützkörper 49 angeordnet.

Die Magnetelemente 60 am Stützkörper 49 und am Auflagekörper 80 sind entgegengesetzt zueinander gepolt, so dass sie einander anziehen und eine koppelnde Magnetkraft (Kopplungskraft) aufeinander ausüben.

Die Halteeinrichtung 38 weist eine Aufnahme 87 auf. Die Aufnahme 87 ist haubenförmig und weist eine Deckenwand 88 und eine umlaufende Seitenwand 89 auf. Die Seitenwand 89 steht von der Deckenwand 88 in Richtung der Stützeinrichtung 39 ab und bildet einen Rahmen 90.

Die Deckenwand 88 ist über ein Verbindungselement 91 am Grundkörper 66 gehalten.

Der Auflagekörper 80 ist so bemessen, dass er vorliegend formschlüssig in der Aufnahme 87 angeordnet ist und vorzugsweise an der Deckenwand 88 anliegt. Beispielhaft erfolgt eine Verbindung des Auflagekörpers 80 mit dem Grundkörper 66 über ein Schraubelement 92.

Die Stützeinrichtung 39 greift von unten in die Aufnahme 87 ein. Der Stützkörper 49 und vorliegend auch der Abschnitt 50 sind in der Aufnahme 87 angeordnet. Der Rahmen 90 umgibt den Auflagekörper 80 und den Stützkörper 49. Die Aufnahme 87 ist so bemessen, dass der Stützkörper 49 in der Abstandsrichtung 52 vorne und hinten mit Spiel in der Aufnahme 87 angeordnet ist. In der Querrichtung 51 ist der Stützkörper 49 vorzugsweise formschlüssig in der Aufnahme 87 angeordnet.

Die Fixiervorrichtung 37 umfasst ein Anschlagteil 94. Das Anschlagteil 94 kann alternativ Bestandteil des Systems 10 oder der Wiegevorrichtung 30 sein. Das Anschlagteil 94 ist im vorliegenden Fall bevorzugt ortsfest positioniert und dabei insbesondere auf dem Gestell 35 gehalten. Das Anschlagteil 94 ist gesondert von der Stützeinrichtung 39 und der Halteeinrichtung 38 gebildet.

Das Anschlagteil 94 umfasst einen Grundkörper 95. Am Grundkörper 95 sind Anschlagelemente 96 angeordnet. Vorliegend sind jeder Halteeinrichtung 38 zwei Anschlagelemente 96 zugeordnet, die als zapfenförmige Vorsprünge 97 ausgestaltet sind.

Korrespondierende Anschlagelemente 98 sind von der Halteeinrichtung 38 umfasst. Die Anschlagelemente 98 sind umrandete Eingriffsöffnungen 99, insbesondere Durchgangsöffnungen, an der Halteeinrichtung 38.

Im vorliegenden Fall sind die Anschlagelemente 96, 98 an der der Behälteraufnahme 75 abgewandten Seite der Halteeinrichtung 38 angeordnet.

Der Durchmesser der Eingriffsöffnungen 99 ist so bemessen, dass die Vorsprünge 97 mit Spiel in die Eingriffsöffnungen 99 eingreifen. Dies gibt die Möglichkeit für die Halteeinrichtung 38, sich relativ zum Anschlagteil 94 zu bewegen. Der Bewegungsumfang wird allerdings durch die Dimensionierung eines Vorsprungs 97 relativ zur Eingriffsöffnung 99 bestimmt und begrenzt.

Bei einer andersartigen Ausführung des Anschlagteils 94 ist zum Beispiel mindestens ein Anschlagelement 98 vorgesehen, das unrund ist, beispielsweise oval oder elliptisch, und das in eine korrespondierende Eingriffsöffnung 99 eingreift.

Wie insbesondere aus den Figuren 3 bis 6 hervorgeht, ist die Halteeinrichtung 38 auf die Stützeinrichtung 39 aufgesetzt. Beispielsweise erfolgt das Aufsetzen in der Schwerkraftrichtung 46.

Die Halteeinrichtung 38 liegt über den Auflagekörper 80 auf dem Stützkörper 49 und dadurch auf der Stützeinrichtung 39 auf. Insbesondere liegen der Auflagekörper 80 und der Stützkörper 49 lose aneinander an und sind frei von einer festen mechanischen Verbindung miteinander.

Über die Anlage des Auflagekörpers 80 und des Stützkörpers 49 hinaus ist keine weitere Anlage der Halteeinrichtung 38 an der Stützeinrichtung 39 vorgesehen.

Der Auflagekörper 80 kann am Stützkörper 49 eine definierte Solllage einnehmen (Figur 4). In der Solllage greifen die Vorsprünge 54 in die Aufnahmen 81 ein. Die jeweiligen Magnetelemente 60 sind einander direkt gegenüberliegend angeordnet und wirken über die Magnetkraft zusammen.

Es versteht sich, dass die Magnetelemente 60 des Auflagekörpers 80 und des Stützkörpers 49 einander nicht kontaktieren.

In der Solllage der beiden Körper 49, 80 greifen die Vorsprünge 97 zentriert in die Eingriffsöffnungen 99 ein.

Die Solllage der Körper 49, 80 wird insbesondere dann eingenommen, wenn auf die Halteeinrichtung 38 keine Kraft F1 oder F2 über den Behälter 12 wirkt.

Die Halteeinrichtung 38 kann entgegen der Schwerkraftrichtung 46 von der Stützeinrichtung 39 angehoben werden. In diesem Fall wird auch die Magnetkraft der Magnetelemente 60 überwunden.

Der Auflagekörper 80 ist relativ zum Stützkörper 49 beweglich ausgebildet. Dies ermöglicht es, die Halteeinrichtung 38 relativ zur Stützeinrichtung 39 zu bewegen.

Insbesondere besteht die Möglichkeit einer Kippbewegung der Halteeinrichtung 38 nach hinten, bezogen auf die Einführrichtung 23, sowie nach vorne, bezogen auf die Einführrichtung 23. Hierauf wird nachfolgend eingegangen.

Die beim Einführen des Behälters 12 in die Behälteraufnahme 75 wirkende Kraft F1, wie vorstehend erwähnt, beaufschlagt über die Halteelemente 67 die Halteeinrichtung 38 insgesamt. Die Halteeinrichtung 38 kann nach hinten verkippen, wobei das Kippmoment auf der Kraft F1 beruht.

Da der Auflagekörper 80 lediglich lose auf dem Stützkörper 49 aufliegt, kann der Auflagekörper 80 im Bereich der vorderen Aufnahme 81 angehoben werden. Im Bereich der hinteren Aufnahme 80 verbleibt der Vorsprung 54 in der Aufnahme 81 (Figur 5).

Der Bewegungsumfang der Halteeinrichtung 38 bei der Kippbewegung ist allerdings durch die Anschlagelemente 96, 98 begrenzt. Schlägt der Vorsprung 97 am Rand der Eingriffsöffnung 99 an, erfolgt keine weitere Kippbewegung der Halteeinrichtung 38.

Das Verkippen der Halteeinrichtung 38 erfolgt entgegen der Magnetkraft der Magnetelemente 60. Entfällt die Kraft F1, kehrt der Auflagekörper 80 unter der Wirkung der Schwerkraft und der Magnetkraft wieder in die ursprüngliche Solllage gemäß Figur 4 zurück. Diese Solllage wird insbesondere während des Wiegevorgangs eingenommen.

Beim Entnehmen des Behälters 12 aus der Behälteraufnahme 75 wirkt die bereits erwähnte Kraft F2 über die Halteelemente 67 auf die Halteeinrichtung 38 insgesamt.

Die Halteeinrichtung 38 kann relativ zur Stützeinrichtung 39 nach vorne verkippen, wobei das Kippmoment auf der Kraft F2 beruht.

Da der Auflagekörper 80 lediglich lose auf dem Stützkörper 49 aufliegt, kann der Auflagekörper 80 im Bereich der hinteren Aufnahme 81 angehoben werden. Im Bereich der vorderen Aufnahme 81 verbleibt der Vorsprung 54 demgegenüber in der Aufnahme 81.

Der Bewegungsumfang der Kippbewegung der Halteeinrichtung 38 ist auch in diesem Fall durch die Anschlagelemente 96, 98 begrenzt. Die Halteeinrichtung 38 kann solange verkippt werden, bis der Vorsprung 97 am hinteren Rand der Eingriffsöffnung 99 anschlägt (Figur 6).

Entfällt die Kraft F2, kehrt der Auflagekörper 38 wieder in die Solllage am Stützkörper 49 zurück, unter der Wirkung der Schwerkraft sowie der Magnetkraft der Magnetelemente 60. Dies ist beispielsweise dann der Fall, wenn in der Behälteraufnahme 75 kein Behälter 12 angeordnet ist.

Durch die Ausgestaltung der erfindungsgemäßen Fixiervorrichtung 37 kann die Kraft beim Einsetzen und Entnehmen von Behältern 12 begrenzt werden, die auf die Stützeinrichtung 39 wirkt und über diese auf die Wiegezelle 31. Eine übermäßige Belastung und Beschädigung der Wiegezelle 31 kann auf diese Weise vermieden werden. Darüber hinaus können Einschwingvorgänge verkürzt und das Messergebnis verbessert werden.

Ferner kann die Wahrscheinlichkeit einer Beschädigung des Behälters 12 beim Einsetzen in die Behälteraufnahme 75 oder beim Entnehmen aus der Behälteraufnahme 75 durch die Kippbewegungen der Halteeinrichtung 38 verringert werden.

Es versteht sich, dass ein Verkippen der Halteeinrichtung 38 zum Beispiel nur dann eintritt, wenn die Kraft F1 und/oder F2 einen Schwellenwert übersteigt und ein Kippmoment erzeugt, das hinreichend groß für die Verkippung der Halteeinrichtung 38 nach hinten und/oder nach vorne ist.

### Bezugszeichenliste

- 10: System
- 12: Behälter
- 14: Spritze
- 15: Spritzenkörper
- 17: Transportanordnung
- 18: Transportvorrichtung
- 19: Halteteil
- 20: Greifelement
- 22: Transportrichtung
- 23: Einführrichtung
- 24: Entnahmerichtung
- 26: Antriebsvorrichtung
- 27: Einkoppelelement
- 28: Auskoppelelement
- 30: Wiegevorrichtung
- 31: Wiegezelle
- 32: Befüllvorrichtung
- 33: Schließvorrichtung
- 34: Steuervorrichtung
- 35: Gestell
- 37: Fixiervorrichtung
- 38: Halteeinrichtung
- 39: Stützeinrichtung
- 41: Verbindungskörper
- 42: Basiselement
- 43: Verbindungselement
- 44: Aufnahmeelement
- 45: Säulenelement
- 46: Schwerkraftrichtung
- 47: Versteifungselement
- 49: Stützkörper
- 50: Abschnitt
- 51: Querrichtung
- 52: Abstandsrichtung
- 54: Vorsprung
- 55: Wellenberg
- 56: Wellental
- 58: Ausrichtelement
- 60: Magnetelement
- 61: Kopplungselement
- 62: Aufnahme
- 63: Schließelement
- 64: Oberfläche
- 66: Grundkörper
- 67: Halteelement
- 68: Schwenkachse
- 69: Haltevorsprung
- 70: Halteglied
- 71: Koppelelement
- 72: Vorspannelement
- 74: Abdeckelement
- 75: Behälteraufnahme
- 76: Aufnahmerichtung
- 77: Erstreckungsrichtung
- 78: Anlageelement
- 79: Nut
- 80: Auflagekörper
- 81: Aufnahme
- 82: Randabschnitt
- 83: Randabschnitt
- 84: Ausrichtelement
- 85: Kopplungselement
- 87: Aufnahme
- 88: Deckenwand
- 89: Seitenwand
- 90: Rahmen
- 91: Verbindungselement
- 92: Schraubelement
- 94: Anschlagteil
- 95: Grundkörper
- 96: Anschlagelement
- 97: Vorsprung
- 98: Anschlagelement
- 99: Eingriffsöffnung

## Patentansprüche

1. Fixiervorrichtung zum vorübergehenden Fixieren eines insbesondere pharmazeutischen Behälters (12) an einer Wiegevorrichtung (30) eines Systems (10) zum Verarbeiten von Behältern (12), umfassend eine Halteeinrichtung (38) und eine Stützeinrichtung (39), wobei die Halteeinrichtung (38) eine Behälteraufnahme (75), in die der Behälter (12) einführbar und aus der der Behälter (12) entnehmbar ist, mindestens ein Halteelement (67) zum Halten des Behälters (12) in der Behälteraufnahme (75) und einen Auflagekörper (80) umfasst, wobei die Stützeinrichtung (39) einen Stützkörper (49) und einen mit dem Stützkörper (49) verbundenen Verbindungskörper (41) zum Verbinden mit der Wiegevorrichtung (30) umfasst, wobei die Halteeinrichtung (38) über den Auflagekörper (80) auf dem Stützkörper (49) aufliegt, wobei der Auflagekörper (80) relativ zum Stützkörper (49) beweglich ausgestaltet ist abhängig von einer Kraft auf die Halteeinrichtung (38), insbesondere auf das mindestens eine Halteelement (67), beim Einführen des Behälters (12) in die Behälteraufnahme (75) und/oder beim Entnehmen des Behälters (12) aus der Behälteraufnahme (75).

2. Fixiervorrichtung nach Anspruch 1, **dadurch gekennzeichnet, dass** die Halteeinrichtung (38) und die Stützeinrichtung (39), insbesondere der Auflagekörper (80) und der Stützkörper (49), lose aneinander anliegen und/oder frei von insbesondere fester mechanischer Verbindung miteinander sind, und/oder dass die Halteeinrichtung (38) allein über den Auflagekörper (80) und den Stützkörper (49) auf der Stützeinrichtung (39) aufliegt.

3. Fixiervorrichtung nach einem der voranstehenden Ansprüche, **dadurch gekennzeichnet, dass** die Halteeinrichtung (38) und die Stützeinrichtung (39), insbesondere der Auflagekörper (80) und der Stützkörper (49), frei von einem Gelenk mit beweglich miteinander verbundenen Gelenkgliedern sind, und/oder dass die Halteeinrichtung (38) in Schwerkraftrichtung auf die Stützeinrichtung (39) aufsetzbar und entgegen der Schwerkraftrichtung von der Stützeinrichtung anhebbar und dadurch von dieser lösbar ist.

4. Fixiervorrichtung nach einem der voranstehenden Ansprüche, **dadurch gekennzeichnet, dass** der Behälter (12) in einer definierten Einführrichtung (23) in die Behälteraufnahme (75) einführbar und/oder in einer definierten Entnahmerichtung (24) aus der Behälteraufnahme (75) entnehmbar ist, wobei vorzugsweise mindestens eines der Folgenden gilt:
- die Einführrichtung (23) und die Entnahmerichtung (24) sind einander entgegengesetzt;
- die Einführrichtung (23) und/oder die Entnahmerichtung (24) ist quer und insbesondere senkrecht zu einer Erstreckungsrichtung (77) des Behälters (12) ausgerichtet.

5. Fixiervorrichtung nach einem der voranstehenden Ansprüche, **dadurch gekennzeichnet, dass** die Halteeinrichtung (38) relativ zur Stützeinrichtung (39) verkippbar ausgestaltet ist beim Einsetzen des Behälters (12) in die Behälteraufnahme (75) und/oder beim Entnehmen aus der Behälteraufnahme (75), und/oder dass die Halteeinrichtung (38) relativ zur Stützeinrichtung (39) verschiebbar ausgestaltet ist.

6. Fixiervorrichtung nach einem der voranstehenden Ansprüche, **dadurch gekennzeichnet, dass** die Fixiervorrichtung (37) ein ortsfestes Anschlagteil (94) umfasst mit mindestens einem ersten Anschlagelement (96), wobei die Halteeinrichtung (38) mindestens ein korrespondierendes zweites Anschlagelement (98) umfasst zum Zusammenwirken mit dem mindestens einen ersten Anschlagelement (96), wobei über die Anschlagelemente (96, 98) ein Bewegungsumfang der Halteeinrichtung (38) relativ zur Stützeinrichtung (39) in zumindest einer Richtung begrenzt wird, vorzugsweise in zwei Richtungen.

7. Fixiervorrichtung nach Anspruch 6, **dadurch gekennzeichnet, dass** zumindest eines der Folgenden gilt:
- die Anschlagelemente (96, 98) sind auf einer der Behälteraufnahme (75) abgewandten Seite der Halteeinrichtung (38) angeordnet;
- jeweils zwei im Abstand zueinander angeordnete Anschlagelemente (96, 98) des Anschlagteils (94) und der Halteeinrichtung (38) sind vorgesehen;
- über die korrespondierenden Anschlagelemente (96, 96) wird der Bewegungsumfang einer Kippbewegung der Halteeinrichtung (38) relativ zur Stützeinrichtung (39) in mindestens einer Kipprichtung begrenzt, vorzugsweise in zwei Kipprichtungen;
- als Anschlagelemente (96, 98) sind ein zapfenförmiger Vorsprung (97) und eine Eingriffsöffnung (99) vorgesehen, in die der Vorsprung (97) mit Spiel eingreift.

8. Fixiervorrichtung nach einem der voranstehenden Ansprüche, **dadurch gekennzeichnet, dass** der Stützkörper (49) und der Auflagekörper (80) jeweilige Ausrichtelemente (58, 84) umfassen, die zur Definition einer Solllage des Auflagekörpers (80) und des Stützkörpers (49) zusammenwirken.

9. Fixiervorrichtung nach Anspruch 8, **dadurch gekennzeichnet, dass** zumindest eines der Folgenden gilt:
- die Ausrichtelemente (58, 84) umfassen mindestens einen Vorsprung (54) am Stützkörper (49) in Richtung des Auflagekörpers (80) und mindestens eine Aufnahme (81) am Auflagekörper (80) zur Aufnahme des Vorsprungs (54), oder umgekehrt, wobei vorzugsweise der mindestens eine Vorsprung (54) im Querschnitt bogenförmig ausgestaltet ist, insbesondere zumindest abschnittsweise kreisbogenförmig oder sinusförmig und/oder die mindestens eine Aufnahme (81) im Querschnitt V-förmig, trapezförmig oder bogenförmig ausgestaltet ist;
- am Stützkörper (49) und am Auflagekörper (80) sind jeweils zwei Ausrichtelemente (58, 84) vorgesehen, die in einer Abstandsrichtung (52), insbesondere längs einer Einführrichtung (23) des Behälters (12) in die Behälteraufnahme (75), im Abstand zueinander angeordnet sind.

10. Fixiervorrichtung nach Anspruch 8 oder 9, **dadurch gekennzeichnet, dass** zumindest eines der Folgenden gilt:
- die Ausrichtelemente (58, 84) sind entlang einer Erstreckungsrichtung (51) längserstreckt ausgestaltet und weisen dabei einen konstanten Querschnitt auf;
- der mindestens eine Vorsprung (54) liegt in der Solllage des Auflagekörpers (80) und des Stützkörpers (49) entlang zweier Auflagelinien an einem Rand der mindestens einen Aufnahme (81) an;
- der Stützkörper (49) oder der Auflagekörper (80) ist längs der Abstandsrichtung (52) wellenförmig ausgestaltet mit zwei quer und insbesondere senkrecht zur Abstandsrichtung (52) verlaufenden Wellenbergen (55) und einem dazwischen liegenden Wellental (56);
- der Auflagekörper (80) oder der Stützkörper (49) weist längs der Abstandsrichtung (52) zwei im Abstand zueinander angeordnete und quer und insbesondere senkrecht zur Abstandsrichtung (52) verlaufende Nuten (79) auf, insbesondere mit V-förmigem, trapezförmigem oder bogenförmigem Querschnitt.

11. Fixiervorrichtung nach einem der voranstehenden Ansprüche, **dadurch gekennzeichnet, dass** die Fixiervorrichtung (37) an der Halteeinrichtung (38) und an der Stützeinrichtung (39) zusammenwirkende Kopplungselemente (61, 85) umfasst, zwischen denen eine Kopplungskraft wirkt.

12. Fixiervorrichtung nach Anspruch 11, **dadurch gekennzeichnet, dass** zumindest eines der Folgenden gilt:
- die Kopplungselemente (61, 85) sind als Magnetelemente (60) ausgestaltet oder durch diese, entgegen deren Magnetkraft die Halteeinrichtung (38) relativ zur Stützeinrichtung (39) bewegbar und/oder von dieser entfernbar ist;
- die Fixiervorrichtung (37) umfasst am Auflagekörper (80) und am Stützkörper (49) mindestens jeweils ein Kopplungselement (61, 85), wobei vorzugsweise jeweils eine Mehrzahl von Kopplungselementen (61, 85) am Auflagekörper (80) und/oder am Stützkörper (49) angeordnet ist;
- das mindestens eine Kopplungselement (85) an der Halteeinrichtung (38) und das mindestens eine Kopplungselement (61) an der Stützeinrichtung (39) sind in der Schwerkraftrichtung (46) übereinander angeordnet;
- der Stützkörper (49) und der Auflagekörper (80) umfassen jeweilige Ausrichtelemente (58, 84), die zur Definition einer Solllage des Auflagekörpers (80) und des Stützkörpers (49) zusammenwirken, wobei an jeweils mindestens einem Ausrichtelement (58, 84) des Auflagekörpers (80) und des Stützkörpers (49) Kopplungselemente (61, 85) angeordnet sind.

13. Fixiervorrichtung nach einem der voranstehenden Ansprüche, **dadurch gekennzeichnet, dass** die Fixiervorrichtung (37) an der Halteeinrichtung (38) oder an der Stützeinrichtung (39) eine Aufnahme (87) umfasst, in die die Stützeinrichtung (39) oder die Halteeinrichtung (38) eingreift, wobei der Auflagekörper (80) und der Stützkörper (49) in der Aufnahme angeordnet sind.

14. Fixiervorrichtung nach Anspruch 13, **dadurch gekennzeichnet, dass** zumindest eines der Folgenden gilt:
- die Aufnahme (87) umfasst eine Deckenwand (88) oder bildet eine Deckenwand (88) aus, die den Auflagekörper (80) und den Stützkörper (49) überdeckt, und/oder einen Rahmen (90), der den Auflagekörper (80) und den Stützkörper (49) entlang eines vorzugsweise gesamten Umfangs umgibt;
- der Stützkörper (49) oder der Auflagekörper (80) greift mit Spiel in die Aufnahme (87) ein, wobei vorzugsweise das Spiel längs in einer Einführrichtung (23) des Behälters (12) in die Behälteraufnahme (75) größer ist als in einer Querrichtung (51) quer und insbesondere senkrecht zur Einführrichtung (23).

15. System zum Verarbeiten von insbesondere pharmazeutischen Behältern, umfassend eine Wiegevorrichtung (30), mindestens eine Fixiervorrichtung (37) nach einem der voranstehenden Ansprüche, die mit der Wiegevorrichtung (30) verbunden ist, und mindestens eine Transportvorrichtung (18), mit der mindestens ein Behälter (12) der mindestens einen Fixiervorrichtung (37) übergebbar und von dieser entnehmbar ist.

## Claims

1. A fixing apparatus for temporarily fixing a container (12), in particular a pharmaceutical container, to a weighing apparatus (30) of a system (10) for processing containers (12), comprising a holding device (38) and a support device (39), wherein the holding device (38) comprises a container receptacle (75) into which the container (12) is insertable and out of which the container (12) is removeable, at least one holding element (67) for holding the container (12) in the container receptacle (75), and a contact body (80), wherein the support device (39) comprises a support body (49) and a connection body (41), which is connected to the support body (49), for connecting to the weighing apparatus (30), wherein the holding device (38) rests on the support body (49) via the contact body (80), wherein the contact body (80) is configured to be movable relative to the support body (49) on the basis of a force acting on the holding device (38), in particular on the at least one holding element (67), when the container (12) is inserted into the container receptacle (75) and/or when the container (12) is removed from the container receptacle (75).

2. The fixing apparatus in accordance with claim 1, **characterized in that** the holding device (38) and the support device (39), in particular the contact body (80) and the support body (49), rest loosely on one another and/or do not have an, in particular, fixed mechanical connection to one another, and/or **in that** the holding device (38) rests on the support device (39) solely via the contact body (80) and the support body (49).

3. The fixing apparatus in accordance with any one of the preceding claims, **characterized in that** the holding device (38) and the support device (39), in particular the contact body (80) and the support body (49), do not have a joint with joint members that are movably connected to one another, and/or **in that** the holding device (38) is configured to be placed on the support device (39) in the direction of gravity and is configured to be lifted from the support device against the direction of gravity and thereby detached from it.

4. The fixing apparatus in accordance with any one of the preceding claims, **characterized in that** the container (12) is configured to be inserted into the container receptacle (75) in a defined direction of insertion (23) and/or is configured to be removed from the container receptacle (75) in a defined removal direction (24), wherein preferably at least one of the following applies:
- the direction of insertion (23) and the removal direction (24) are opposite to one another;
- the direction of insertion (23) and/or the removal direction (24) is aligned transversely and in particular perpendicularly to a direction (77) of extension of the container (12).

5. The fixing apparatus in accordance with any one of the preceding claims, **characterized in that** the holding device (38) is configured to be tiltable relative to the support device (39) when the container (12) is inserted into the container receptacle (75) and/or when it is removed from the container receptacle (75) and/or in that the holding device (38) is configured to be displaceable relative to the support device (39).

6. The fixing apparatus in accordance with any one of the preceding claims, **characterized in that** the fixing apparatus (37) comprises a stationary stop part (94) with at least one first stop element (96), wherein the holding device (38) comprises at least one corresponding second stop element (98) for interacting with the at least one first stop element (96), wherein a range of movement of the holding device (38) relative to the support device (39) is limited in at least one direction, preferably in two directions, via the stop elements (96, 98).

7. The fixing apparatus in accordance with claim 6, **characterized in that** at least one of the following applies:
- the stop elements (96, 98) are arranged on a side of the holding device (38) facing away from the container receptacle (75);
- two stop elements (96, 98) of the stop part (94) and of the holding device (38) arranged at a distance from one another are provided;
- the movement range of a tilting movement of the holding device (38) relative to the support device (39) in at least one tilting direction is limited via the corresponding stop elements (96, 98), preferably in two tilting directions;
- a peg-shaped projection (97) and an engagement opening (99), in which the projection (97) engages with play, are provided as stop elements (96, 98).

8. The fixing apparatus in accordance with any one of the preceding claims, **characterized in that** the support body (49) and the contact body (80) comprise corresponding alignment elements (58, 84) which interact to define a target position of the contact body (80) and of the support body (49).

9. The fixing apparatus in accordance with claim 8, **characterized in that** at least one of the following applies:
- the alignment elements (58, 84) comprise at least one projection (54) on the support body (49) in the direction of the contact body (80), and at least one receptacle (81) on the contact body (80) for receiving the projection (54), or vice versa, wherein preferably the at least one projection (54) is configured arcuate in cross section, in particular at least in portions with a circular arc shape or a sinusoidal shape and/or the at least one receptacle (81) is configured V-shaped, trapezoidal, or arcuate in cross section;
- two alignment elements (58, 84) are provided in each case on the support body (49) and on the contact body (80), which alignment elements (58, 84) are arranged at a distance from one another in a distance direction (52), in particular along a direction of insertion (23) of the container (12) into the container receptacle (75).

10. The fixing apparatus in accordance with claim 8 or 9, **characterized in that** at least one of the following applies:
- the alignment elements (58, 84) are configured to extend longitudinally along an extension direction (51) and have a constant cross section;
- in the target position of the contact body (80) and the support body (49), the at least one projection (54) rests on an edge of the at least one receptacle (81) along two contact lines;
- the support body (49) or the contact body (80) is configured wave-shaped along the distance direction (52), with two wave peaks (55) running transversely and in particular perpendicularly to the distance direction (52) and a wave trough (56) between them;
- the contact body (80) or the support body (49) has two grooves (79) arranged at a distance from one another along the distance direction (52) and running transversely and in particular perpendicularly to the distance direction (52), in particular with a V-shaped, trapezoidal, or arcuate cross section.

11. The fixing apparatus in accordance with any one of the preceding claims, **characterized in that** the fixing apparatus (37) comprises coupling elements (61, 85) interacting on the holding device (38) and on the support device (39), between which elements a coupling force acts.

12. The fixing apparatus in accordance with claim 11, **characterized in that** at least one of the following applies:
- the coupling elements (61, 85) are configured as or formed by magnetic elements (60), against the magnetic force of which the holding device (38) is configured to be moved relative to the support device (39) and/or is configured to be removed from it;
- the fixing apparatus (37) comprises in each case at least one coupling element (61, 85) on the contact body (80) and on the support body (49), wherein preferably a plurality of coupling elements (61, 85) is arranged in each case on the contact body (80) and/or on the support body (49);
- the at least one coupling element (85) on the holding device (38) and the at least one coupling element (61) on the support device (39) are arranged one above the other in the direction of gravity (46);
- the support body (49) and the contact body (80) comprise respective alignment elements (58, 84), which interact for definition of a target position of the contact body (80) and the support body (49), wherein coupling elements (61, 85) are arranged on, in each case, at least one alignment element (58, 84) of the contact body (80) and of the support body (49).

13. The fixing apparatus in accordance with any one of the preceding claims, **characterized in that** the fixing apparatus (37) comprises a receptacle (87) on the holding device (38) or on the support device (39), in which receptacle (87) the support device (39) or the holding device (38) engages, wherein the contact body (80) and the support body (49) are arranged in the receptacle.

14. The fixing apparatus in accordance with claim 13, **characterized in that** at least one of the following applies:
- the receptacle (87) comprises a top wall (88) of forms a top wall (88) which covers the contact body (80) and the support body (49), and/or a frame (90) which surrounds the contact body (80) and the support body (49) along preferably an entire circumference;
- the support body (49) or the contact body (80) engages with play in the receptacle (87), wherein preferably the play is greater longitudinally in a direction of insertion (23) of the container (12) into the container receptacle (75) than in a transverse direction (51) transversely and in particular perpendicularly to the direction of insertion (23).

15. A system for processing in particular pharmaceutical containers, comprising a weighing apparatus (30), at least one fixing apparatus (37) in accordance with any one of the preceding claims, which is connected to the weighing apparatus (30), and at least one transport apparatus (18), with which at least one container (12) is transferable to the at least one fixing apparatus (37) and removable therefrom.

## Revendications

1. Dispositif de fixation pour la fixation temporaire d'un récipient (12), en particulier pharmaceutique, sur un dispositif de pesage (30) d'un système (10) de traitement de récipients (12), comprenant un dispositif de retenue (38) et un dispositif de support (39), le dispositif de retenue (38) comprenant un logement de récipient (75) dans lequel le récipient (12) peut être introduit et duquel le récipient (12) peut être retiré, au moins un élément de retenue (67) pour maintenir le récipient (12) dans le logement de récipient (75) et un corps d'appui (80), le dispositif de support (39) comprenant un corps de support (49) et un corps de liaison (41) relié au corps de support (49) pour la liaison avec le dispositif de pesage (30), le dispositif de retenue (38) reposant sur le corps de support (49) par l'intermédiaire du corps d'appui (80), le corps d'appui (80) étant conçu de manière mobile par rapport au corps de support (49) en fonction d'une force exercée sur le dispositif de retenue (38), en particulier sur l'au moins un élément de retenue (67), lors de l'introduction du récipient (12) dans le logement de récipient (75) et/ou lors du retrait du récipient (12) du logement de récipient (75).

2. Dispositif de fixation selon la revendication 1, **caractérisé en ce que** le dispositif de retenue (38) et le dispositif de support (39), en particulier le corps d'appui (80) et le corps de support (49), s'appliquent l'un contre l'autre de manière lâche et/ou sont exempts de toute liaison mécanique, en particulier fixe, entre eux, et/ou **en ce que** le dispositif de retenue (38) repose sur le dispositif de support (39) uniquement par l'intermédiaire du corps d'appui (80) et du corps de support (49).

3. Dispositif de fixation selon l'une des revendications précédentes, **caractérisé en ce que** le dispositif de retenue (38) et le dispositif de support (39), en particulier le corps d'appui (80) et le corps de support (49), sont dépourvus d'articulation avec des éléments articulés reliés entre eux de manière mobile, et/ou le dispositif de retenue (38) peut être placé sur le dispositif de support (39) dans la direction de la gravité et peut être soulevé du dispositif de support dans le sens opposé à la gravité, et ainsi être détaché de celui-ci.

4. Dispositif de fixation selon l'une des revendications précédentes, **caractérisé en ce que** le récipient (12) peut être introduit dans le logement de récipient (75) dans une direction d'introduction définie (23) et/ou peut être retiré du logement de récipient (75) dans une direction de retrait définie (24), de préférence au moins l'un des éléments suivants s'applique:
- la direction d'introduction (23) et la direction de retrait (24) sont opposées l'une à l'autre ;
- la direction d'introduction (23) et/ou la direction de retrait (24) est ou sont orientées transversalement et en particulier perpendiculairement à une direction d'extension (77) du récipient (12).

5. Dispositif de fixation selon l'une des revendications précédentes, **caractérisé en ce que** le dispositif de retenue (38) est conçu de manière à pouvoir basculer par rapport au dispositif de support (39) lors de l'introduction du récipient (12) dans le logement de récipient (75) et/ou lors du retrait du logement de récipient (75), et/ou **en ce que** le dispositif de retenue (38) est conçu de manière à pouvoir coulisser par rapport au dispositif de support (39).

6. Dispositif de fixation selon l'une des revendications précédentes, **caractérisé en ce que** le dispositif de fixation (37) comprend une partie de butée fixe (94) avec au moins un premier élément de butée (96), le dispositif de retenue (38) comprenant au moins un deuxième élément de butée correspondant (98) pour coopérer avec l'au moins un premier élément de butée (96), une amplitude de mouvement du dispositif de retenue (38) par rapport au dispositif de support (39) étant limitée dans au moins une direction, de préférence dans deux directions, par l'intermédiaire des éléments de butée (96, 98).

7. Dispositif de fixation selon la revendication 6, **caractérisé en ce qu'**au moins l'un des éléments suivants s'applique :
- les éléments de butée (96, 98) sont agencés sur un côté du dispositif de retenue (38) qui est opposé au logement de récipient (75) ;
- il est prévu respectivement deux éléments de butée (96, 98), agencés à distance l'un de l'autre, de la partie de butée (94) et du dispositif de retenue (38) ;
- par l'intermédiaire des éléments de butée correspondants (96, 96), l'amplitude de mouvement d'un mouvement de basculement du dispositif de retenue (38) par rapport au dispositif de support (39) est limitée dans au moins une direction de basculement, de préférence dans deux directions de basculement ;
- il est prévu comme éléments de butée (96, 98) une saillie (97) en forme de tenon et une ouverture d'engagement (99) dans laquelle la saillie (97) s'engage avec jeu.

8. Dispositif de fixation selon l'une des revendications précédentes, **caractérisé en ce que** le corps de support (49) et le corps d'appui (80) comprennent des éléments d'alignement respectifs (58, 84) qui coopèrent pour définir une position de consigne du corps d'appui (80) et du corps de support (49).

9. Dispositif de fixation selon la revendication 8, **caractérisé en ce qu'**au moins l'un des éléments suivants s'applique :
- les éléments d'alignement (58, 84) comprennent au moins une saillie (54) sur le corps de support (49) en direction du corps d'appui (80) et au moins un logement (81) sur le corps d'appui (80) pour recevoir la saillie (54), ou inversement, de préférence l'au moins une saillie (54) étant conçue en forme d'arc en section transversale, en particulier en forme d'arc de cercle ou de sinus au moins par sections et/ou l'au moins un logement (81) étant conçu en forme de V, de trapèze ou d'arc en section transversale ;
- sur le corps de support (49) et sur le corps d'appui (80), sont prévus respectivement deux éléments d'alignement (58, 84) qui sont agencés à distance l'un de l'autre dans une direction d'écartement (52), en particulier le long d'une direction d'introduction (23) du récipient (12) dans le logement de récipient (75).

10. Dispositif de fixation selon la revendication 8 ou 9, **caractérisé en ce qu'**au moins l'un des éléments suivants s'applique :
- les éléments d'alignement (58, 84) sont conçus de manière à s'étendre longitudinalement le long d'une direction d'extension (51) et présentent alors une section transversale constante ;
- l'au moins une saillie (54) s'appuie, dans la position de consigne du corps d'appui (80) et du corps de support (49), le long de deux lignes de support sur un bord de l'au moins un logement (81) ;
- le corps de support (49) ou le corps d'appui (80) est réalisé en forme d'ondulation le long de la direction d'écartement (52) avec deux crêtes d'ondulation (55) s'étendant transversalement et, en particulier perpendiculairement, à la direction d'écartement (52) et un creux d'ondulation (56) situé entre elles ;
- le corps d'appui (80) ou le corps de support (49) présente le long de la direction d'écartement (52) deux rainures (79) agencées à distance l'une de l'autre et s'étendant transversalement et, en particulier, perpendiculairement à la direction d'écartement (52), en particulier avec une section transversale en forme de V, de trapèze ou d'arc.

11. Dispositif de fixation selon l'une des revendications précédentes, **caractérisé en ce que** le dispositif de fixation (37) comprend des éléments de couplage (61, 85) coopérant au niveau du dispositif de retenue (38) et du dispositif de support (39), entre lesquels agit une force de couplage.

12. Dispositif de fixation selon la revendication 11, **caractérisé en ce qu'**au moins l'un des éléments suivants s'applique :
- les éléments de couplage (61, 85) sont conçus comme des éléments magnétiques (60) ou constitués par ceux-ci, à l'encontre de la force magnétique desquels le dispositif de retenue (38) peut être déplacé par rapport au dispositif de support (39) et/ou éloigné de celui-ci ;
- le dispositif de fixation (37) comprend sur le corps d'appui (80) et sur le corps de support (49) au moins, respectivement, un élément de couplage (61, 85), de préférence, respectivement, une pluralité d'éléments de couplage (61, 85) étant agencés sur le corps d'appui (80) et/ou sur le corps de support (49) ;
- l'au moins un élément de couplage (85) sur le dispositif de retenue (38) et l'au moins un élément de couplage (61) sur le dispositif de support (39) sont agencés l'un au-dessus de l'autre dans la direction de la gravité (46) ;
- le corps de support (49) et le corps d'appui (80) comprennent des éléments d'alignement respectifs (58, 84) qui coopèrent pour définir une position de consigne du corps d'appui (80) et du corps de support (49), des éléments de couplage (61, 85) étant agencés sur respectivement au moins un élément d'alignement (58, 84) du corps d'appui (80) et du corps de support (49).

13. Dispositif de fixation selon l'une des revendications précédentes, **caractérisé en ce que** le dispositif de fixation (37) comprend, sur le dispositif de retenue (38) ou sur le dispositif de support (39), un logement (87) dans lequel s'engage le dispositif de support (39) ou le dispositif de retenue (38), le corps d'appui (80) et le corps de support (49) étant agencés dans le logement.

14. Dispositif de fixation selon la revendication 13, **caractérisé en ce qu'**au moins l'un des éléments suivants s'applique :
- le logement (87) comprend une paroi de plafond (88) ou forme une paroi de plafond (88) qui recouvre le corps d'appui (80) et le corps de support (49), et/ou un cadre (90) qui entoure le corps d'appui (80) et le corps de support (49) le long d'une circonférence de préférence entière ;
- le corps de support (49) ou le corps d'appui (80) s'engage avec jeu dans le logement (87), le jeu étant de préférence plus grand dans le sens longitudinal dans une direction d'introduction (23) du récipient (12) dans le logement de récipient (75) que dans une direction transversale (51) transversalement et, en particulier, perpendiculairement à la direction d'introduction (23).

15. Système pour le traitement de récipients, en particulier pharmaceutiques, comprenant un dispositif de pesage (30), au moins un dispositif de fixation (37) selon l'une des revendications précédentes, qui est relié au dispositif de pesage (30), et au moins un dispositif de transport (18) avec lequel au moins un récipient (12) peut être transféré à l'au moins un dispositif de fixation (37) et peut être retiré de celui-ci.
